Europäisches Patentamt

European Patent Office

Office européen des brevets

(19)

(11) Numéro de publication: **0 252 783 B1**

## FASCICULE DE BREVET EUROPEEN

(12)

(45) Date de publication de fascicule du brevet:
**15.05.91**

(51) Int. Cl.⁵: **A47C 31/02**

(21) Numéro de dépôt: **87401277.6**

(22) Date de dépôt: **05.06.87**

(54) **Dispositif de rappel de la coiffe d'un siège de véhicule automobile.**

(30) Priorité: **01.07.86 FR 8609544**

(43) Date de publication de la demande:
**13.01.88 Bulletin 88/02**

(45) Mention de la délivrance du brevet:
**15.05.91 Bulletin 91/20**

(84) Etats contractants désignés:
**DE ES GB IT**

(56) Documents cités:
**DE-A- 3 037 834       DE-A- 3 212 568**
**DE-B- 1 942 308       GB-A- 1 170 743**
**US-A- 3 630 572       US-A- 3 794 378**
**US-A- 4 452 488**

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Goguillon, René**
**16, rue de la Mairie Sagy**
**F-95450 Vigny(FR)**
Inventeur: **Picard, Jean**
**69, rue Jules Michelet**
**F-92700 Colombes(FR)**

(74) Mandataire: **Polus, Camille et al**
**c/o Cabinet Lavoix 2, Place d'Estienne d'Orves**
**F-75441 Paris Cedex 09(FR)**

EP 0 252 783 B1

**Description**

L'invention concerne un dispositif de rappel de la coiffe d'un siège de véhicule automobile.

Les sièges pour véhicules automobiles comportent un coussin sur lequel on s'assied et un dossier, chacun de ces deux éléments constitutifs du siège étant pourvu d'une matelassure recouverte d'une coiffe ; le siège comporte également, de façon habituelle, une armature et éventuellement des inserts rigides de renforcement placés dans la matelassure.

Afin d'assurer une bonne tenue à la coiffe et un aspect esthétique au siège, on forme de façon courante sur la face externe du siège sur laquelle vient s'appuyer l'utilisateur, des parties en creux obtenues par un rappel de la coiffe vers la face opposée du siège, c'est-à-dire vers l'intérieur de la matelassure. De tels rappels peuvent être prévus sur le dossier et/ou le coussin.

On a proposé en particulier, dans la demande de brevet français n° 86-04721, déposée par les Demanderesses, des dispositifs de rappel qui peuvent être mis en place de façon simple et rapide et qui sont d'un prix de revient faible. Ces moyens de rappel sont constitués par exemple par une bande de toile solidaire suivant l'un de ses bords d'un élément rigide muni de moyens d'accrochage dans la matelassure ou sur l'armature du siège.

De tels dispositifs présentent cependant l'inconvénient de nécessiter la présence d'un bord rectiligne de la coiffe d'une assez grande longueur, le long duquel on fixe la pièce monobloc ou la bande de toile.

Dans le DE-A-3.037.834 on a proposé un dispositif de rappel de la coiffe d'un siège de véhicule automobile comportant au moins une pièce en matière plastique constituée par une plaquette de forme rectangulaire. La plaquette comporte dans son prolongement sur l'un de ses côtés, au moins un moyen d'accrochage destiné à coopérer avec un moyen solidaire de l'armature ou de la matelassure pour le rappel de la coiffe vers l'intérieur de la matelassure. La plaquette est fixée à la coiffe par exemple par encliquetage sur une tige rigide fixée à la coiffe, ce qui présente des inconvénients quant au montage du dispositif de rappel sur la coiffe et quant à la nécessité de prévoir une tige rigide solidaire d'un bord de la coiffe. En outre, le moyen d'accrochage est fixé suivant un petit cité de la plaquette, ce qui n'est pas favorable pour la mise en place et pour la mise en tension de la coiffe.

Le but de l'invention est donc de proposer un dispositif de rappel de la coiffe d'un siège de véhicule automobile comportant un coussin et un dossier, chacun pourvu d'une armature et d'une matelassure recouverte d'une coiffe qui est rappelée vers l'intérieur de la matelassure pour sa fixation et sa mise en tension, constitué par au moins une pièce en matière plastique en forme de plaquette de forme rectangulaire comportant, dans son prolongement, sur l'un de ses côtés, au moins un moyen d'accrochage destiné à coopérer avec un moyen solidaire de l'armature ou de la matelassure pour le rappel de la coiffe vers l'intérieur de la matelassure, ce dispositif, d'une très grande simplicité de fabrication et de pose pouvant être utilisé pour le rappel de la coiffe dans des zones déterminées même de faible longueur.

Dans ce but, la pièce en matière plastique comporte deux zones rigides suivant toute sa longueur, le long de chacun de ses grands côtés, limitant une zone centrale d'épaisseur faible par rapport à l'épaisseur des zones rigides et qui peut être percée pour la fixation par couture de la plaquette à la coiffe.

Afin de bien faire comprendre l'invention, on va maintenant décrire, à titre d'exemple non limitatif, en se référant aux figures jointes en annexe, un mode de réalisation d'un dispositif de rappel suivant l'invention et son utilisation pour le rappel de la coiffe d'un siège de véhicule automobile.

La figure 1 est une vue en perspective et en coupe d'un siège comportant plusieurs parties en creux formées par des moyens de rappel de la coiffe suivant l'invention.

La figure 2 est une vue en plan du dispositif de rappel suivant l'invention.

La figure 3 est une vue de côté suivant III-III de la figure 2.

La figure 4 est une vue de dessus d'un dispositif de rappel suivant l'invention, lors de sa fixation par couture sur la coiffe d'un siège de véhicule automobile.

La figure 5 est une vue de côté du dispositif de rappel fixé par couture sur la coiffe d'un siège, avant la pose de celle-ci.

La figure 6 est une vue en coupe et en élévation d'une partie de la coiffe d'un siège de véhicule automobile fixée et mise en tension grâce à un dispositif de rappel suivant l'invention.

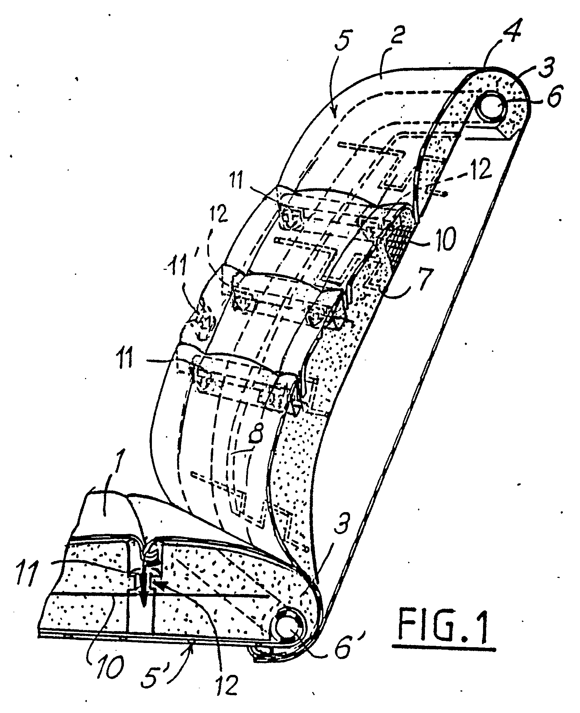

Sur la figure 1, on voit un siège pour véhicule automobile comportant un coussin 1 sur lequel on s'assied et un dossier 2. Chacune des deux parties 1 et 2 du siège comporte une matelassure 3 recouverte d'une coiffe 4. La matelassure 3 du dossier 2 est renforcée par une armature 5. Cette armature 5 comporte une partie tubulaire rigide 6, des fils 7 de direction transversale pliés en créneaux et des éléments de renforcement longitudinaux 8. Le coussin 1 du siège comporte un ensemble de renforcement 5' analogue à l'ensemble 5.

On a de plus représenté, à l'intérieur de la matelassure 3 du coussin 1, un insert 10 constitué par une toile polyamide noyée à l'intérieur de la matelassure. Des inserts 10 de ce type peuvent être placés en différents endroits de la matelassure du siège et également en différents endroits à l'intérieur de la matelassure 3 du dossier 2.

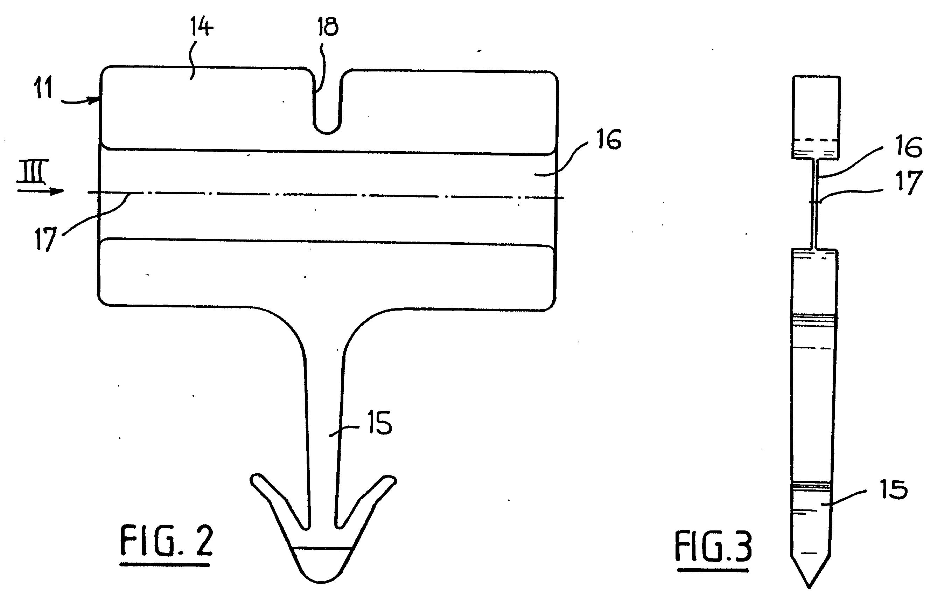

On a également représenté sur la figure 1 un ensemble de dispositifs de rappel 11 suivant l'invention qui seront décrits plus en détail en se référant aux figures 2 et 3.

Comme il est visible sur la figure 1, la matelassure 3 du coussin 1 est interrompue au niveau des moyens de rappel 11 pour permettre l'introduction de ces moyens de rappel dans l'épaisseur du siège et leur fixation sur un insert 10. Des puits 12 permettent l'introduction et le guidage des moyens d'accrochage associés aux dispositifs de rappel 11.

Sur les figures 2 et 3, on voit un moyen de rappel désigné de façon générale par le repère 11 et comportant une plaquette 14 de forme rectangulaire et de faible épaisseur prolongée sur l'un de ses côtés par un moyen d'accrochage 15 constitué par une tige terminée par une ancre de marine à deux branches. Le dispositif 11 est réalisé sous forme monobloc en une matière plastique telle que le polypropylène.

La plaquette rectangulaire 14 comporte une partie centrale 16 d'épaisseur réduite, sur toute sa longueur. L'épaisseur de cette partie 16, de l'ordre de 3 à 4 dizièmes de millimètre, est suffisamment faible pour que la partie 16 puisse être percée par l'aiguille d'une machine à coudre suivant une ligne médiane 17. La plaquette 14 comporte deux parties rigides de part et d'autre de la zone amincie 16 dont l'épaisseur peut être de l'ordre de 2 mm.

Une fente 18 est ménagée à la partie centrale de la plaquette 14, suivant la largeur de la zone rigide de plus forte épaisseur de la plaquette 14 opposée à la zone à laquelle est relié le dispositif de fixation 15. Cette fente 18 traverse toute l'épaisseur de la plaquette 14.

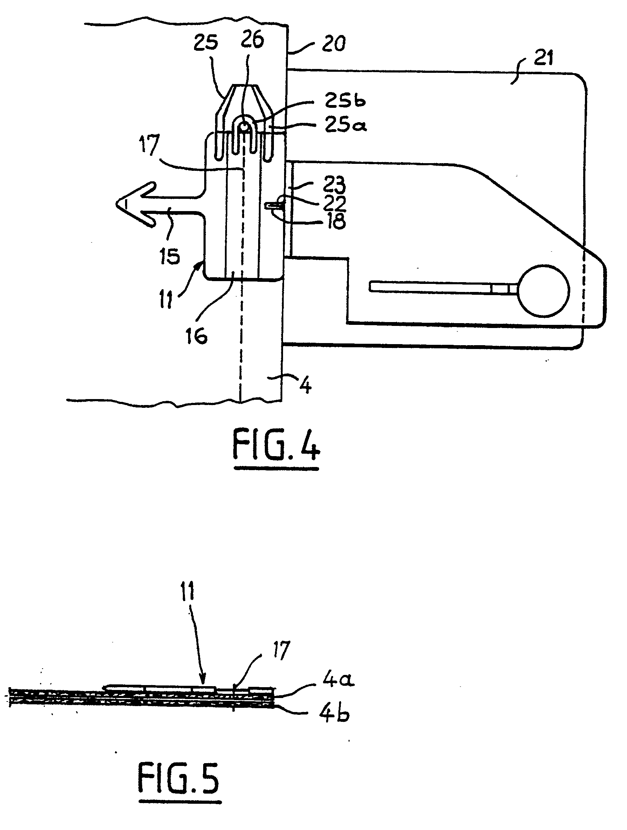

Sur la figure 4, on voit un dispositif 11 en cours de fixation sur la coiffe 4 d'un siège de véhicule automobile, le long de deux bords 20 de cette coiffe mis en coïncidence pour être assemblés par couture en utilisant une machine à coudre dont la plaque support de guide est repérée par 21.

Le dispositif 11 est assemblé à la coiffe pendant l'assemblage par couture des deux bords 20 de la coiffe 4. Pour cela, le dispositif 11 est posé à plat sur une des deux épaisseurs de la coiffe 4, de façon que son bord opposé au dispositif d'accrochage 15 soit aligné avec les bords 20 de la coiffe 4. Un repère 22 tracé sur l'épaisseur de la coiffe recevant le dispositif de rappel 11 permet de placer celui-ci par rapport à cette coiffe en faisant coïncider sa fente 18 avec le repère 22.

Les deux épaisseurs de la coiffe sont en effet préparées et prédécoupées pour leur pose sur le siège de véhicule puis placées l'une sur l'autre, face contre face, l'envers de la coiffe étant visible.

Les parties de la coiffe qui devront se trouver en face de zones d'accrochage sont marquées par des repères 22 sur l'envers de la coiffe.

La plaque support 21 de la machine à coudre comporte un guide latéral 23 le long duquel on déplace les bords 20 des épaisseurs de la coiffe mis en coïncidence et le bord de la plaquette 14 du dispositif 11 lorsque celui-ci se présente au niveau de la plaque support 21, comme représenté sur la figure 4.

La machine à coudre comporte un double pied de biche 25, le pied de biche extérieur 25a ou pied de biche d'entraînement venant en appui, lors du passage du dispositif 11 dans la zone de couture, sur les deux parties rigides de plus forte épaisseur de la plaquette 14 de ce dispositif 11. Le pied de biche intérieur 25b ou pied de biche presseur vient en contact avec la zone 16 de plus faible épaisseur de la plaquette 14. L'aiguille 26 de la machine à coudre, traverse, pour effectuer chacun des points, la partie mince 16 le long de la ligne 17.

Sur la figure 5, on voit le dispositif de rappel 11 tel qu'il se trouve fixé par couture le long du bord de la coiffe 4.

La même opération de couture permet évidemment de fixer plusieurs dispositifs de rappel ponctuel tel que le dispositif 11, le long du bord de la coiffe, généralement avec un espacement régulier.

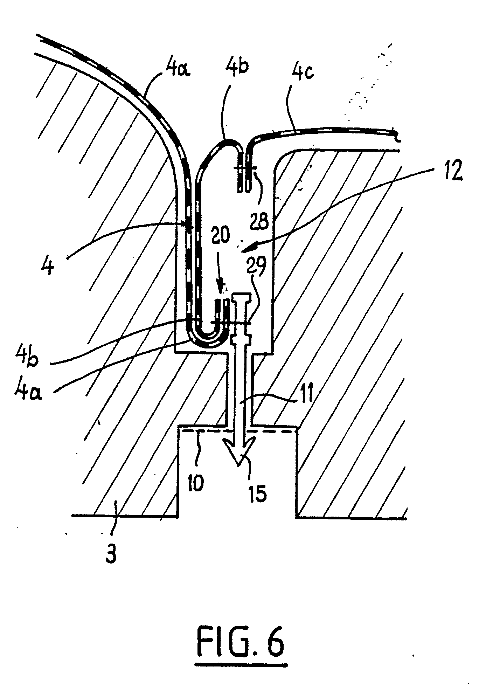

Sur la figure 6, on voit la coiffe 4 après sa mise en place et sa fixation grâce au dispositif de rappel 11 dans la matelassure 3 d'un siège de véhicule automobile tel que représenté sur la figure 1. Cette coiffe comporte deux épaisseurs 4a et 4b assemblées par couture le long de leur bord commun 20, comme représenté sur la figure 5 et solidaires de dispositifs de rappel tel que le dispositif 11 visible sur la figure 6.

La partie 4b de la coiffe formant la seconde épaisseur de celle-ci au niveau de la jonction est une partie intermédiaire de la coiffe 4 permettant la constitution d'une partie en creux avec l'extrémité de la portion 4a de la coiffe et sa jonction à une partie adjacente 4c de cette coiffe. Une couture 28 permet de joindre les parties 4b et 4c de la coiffe.

Pour réaliser la fixation et la mise en tension de la coiffe 4, les dispositifs de rappel 11 sont introduits dans des puits 12 ménagés dans la matelassure 3 et donnant accès à une toile 10 à mailles larges noyée ou fixée dans cette garniture. Les extrémités en forme d'ancre de marine des dispositifs d'accrochage 15 sont introduites dans les mailles de la toile 10, ce qui réalise la fixation et le rappel de la coiffe vers l'intérieur de la matelassure. Les bords de la coiffe fixés par la couture 29 au dispositif de rappel 11 sont repliés sur eux-mêmes, ce qui permet le retournement du dispositif de rappel 11 dont la partie d'accrochage 15 est ainsi dirigée vers le fond du puits 12 et la toile 10.

Il est bien évident que le dispositif de rappel suivant l'invention permet de réaliser un accrochage et une mise en tension de la coiffe soit sur toute la longueur d'un bord rectiligne de la coiffe, soit en des endroits isolés, sur un bord incurvé de cette coiffe, comme le permet le rappel 11' visible sur la figure 1.

D'autre part, le dispositif est particulièrement simple et peu coûteux et peut être fixé à la coiffe, en des endroits bien déterminés, par une opération de couture sur une machine ayant une grande vitesse d'exécution. La fixation de la coiffe sur le siège est elle-même très facile et très rapide à réaliser.

L'invention ne se limite pas au mode de réalisation qui a été décrit.

C'est ainsi qu'on peut imaginer des dispositifs de rappel d'une forme différente, la partie d'épaisseur réduite de la plaquette pouvant être placée différemment sur la plaquette. On peut également imaginer des moyens d'accrochage d'une forme différente d'une ancre de marine.

On peut utiliser toute matière plastique convenable pour la réalisation de ce dispositif et toute forme permettant de faciliter sa fixation par couture sur la coiffe et le repérage de position au moment de sa fixation.

On peut utiliser, pour un même siège, des dispositifs de rappel de différents types ; par exemple des dispositifs conformes à la demande n° 86-04721 pour les rappels de coiffe d'assez grande longueur et des rappels ponctuels selon la présente invention en des endroits isolés tels que les bords incurvés de la coiffe.

**Revendications**

1. Dispositif de rappel de la coiffe (4) d'un siège de véhicule automobile comportant un coussin et un dossier, chacun pourvu d'une armature (5) et d'une matelassure (3) recouverte d'une coiffe (4) qui est rappelée vers l'intérieur de la matelassure (3) pour sa fixation et sa mise en tension, constitué par au moins une pièce en matière plastique (11) en forme de plaquette (14) de forme rectangulaire comportant, dans son prolongement, sur l'un de ses côtés, au moins un moyen d'accrochage (15) destiné à coopérer avec un moyen (10) solidaire de l'armature (5) ou de la matelassure (3) pour le rappel de la coiffe (4) vers l'intérieur de la matelassure (3), caractérisé par le fait que la pièce en matière plastique (11) comporte deux zones rigides suivant toute sa longueur, le long de chacun de ses grands côtés, limitant une zone centrale (16) d'épaisseur faible par rapport à l'épaisseur des zones rigides et qui peut être percée pour la fixation par couture de la plaquette (14) à la coiffe (4).

2. Dispositif de rappel suivant la revendication 1, caractérisé par le fait que l'une des zones rigides de la plaquette (14) est prolongée perpendiculairement aux grands côtés de la plaquette (14) par le dispositif d'accrochage (15) et que l'autre partie rigide de la plaquette (14) comporte, à sa partie centrale, une fente de repérage (18) traversant toute son épaisseur.

3. Dispositif de rappel suivant l'une quelconque des revendications 1 et 2, caractérisé par le fait que les zones rigides de la plaquette (14) ont une épaisseur voisine de 2 mm et la zone centrale (16) d'épaisseur réduite, une épaisseur de l'ordre de 3 à 4 dizièmes de millimètre.

**Claims**

1. Device for attaching a seat cover (4) to a motor car seat comprising a cushion and a seat back, each of which is provided with a frame (5) and padding (3), covered with a cover (4) which is attached towards the interior of the padding (3) in order to secure and tension the said cover, consisting of at least one plastics material part (11), in the form of a rectangular plate (14) comprising, in its extension, on one side, at least one fastening means (15) for co-operating with at least one means (10) integral with the frame (5) or the padding (3) to attach the cover (4) towards the interior of the padding (3), characterised in that the platics material part (11) comprises two rigid zones over the entire length along each of the long sides thereof, delimiting a central zone (16) of slight thickness in relation to the thickness of the rigid zones which may be pierced in order to secure the plate (14) to the cover (4) by stitching.

2. Attaching device according to claim 1, characterised in that one of the rigid zones of the plate (14) is extended perpendicular to the long sides of the plate (14) by the fastening device (15) and in that the other rigid part of the plate (14) comprises, on its centre section, a marking slot (18) passing through the entire thickness thereof.

3. Attaching device according to either of claims 1 and 2, characterised in that the rigid zones of the plate (14) have a thickness of approximately 2 mm and the central zone (16), of a reduced thickness, has a thickness of the order of 3 to 4 tenths of a millimeter.

**Ansprüche**

1. Vorrichtung zum Befestigen eines Überzuges (4) eines Kraftfahrzeugsitzes mit einem Sitzkissen und einer Rückenlehne, die jeweils mit einem Traggestell (5) und einer Polsterung (3) versehen sind, die durch einen Überzug (4) abgedeckt ist, der in Richtung des Inneren der Polsterung (3) zur Befestigung und Spannung gezogen ist, gebildet durch wenigstens ein Kunststoffteil (11) in der Form einer rechteckigen Platte (14), die in Verlängerung einer ihrer Seiten wenigstens eine Verankerungseinrichtung (15) umfaßt, die bestimmt ist, mit einem festen Teil (10) des Traggestells (5) oder der Polsterung (3) zum Ziehen des Überzuges (4) in Richtung des Inneren der Polsterung (3) zusammenzuarbeiten, dadurch **gekennzeichnet,** daß das Kunststoffteil (11) zwei starre, über die gesamte Länge verlaufende, sich entlang der langen Seiten erstreckende Bereiche aufweist, die eine mittlere Zone (16) geringerer Dicke, verglichen mit der Dicke der starren Bereiche, begrenzen, der zum Festnähen der Platte (14) an dem Überzug (4) durchstoßen werden kann.

2. Vorrichtung nach Anspruch 1, dadurch **gekennzeichnet,** daß einer der starren Bereiche der Platte (14) senkrecht zu den langen Seiten der Platte (14) durch die Verankerungseinrichtung (15) verlängert ist, und daß der andere starre Bereich der Platte (14) in seinem Mittelteil einen Markierungsschlitz (18) aufweist, der die gesamte Stärke durchdringt.

3. Vorrichtung nach einem der Ansprüche 1 und 2, dadurch **gekennzeichnet,** daß die starren Bereiche der Platte (14) eine Stärke von etwa 2 mm und der Mittelbereich (16) verringerter Dicke eine Stärke in der Größenordnung von 3/10 bis 4/10 mm aufweisen.

FIG.1

FIG. 2

FIG. 3

EP 0 252 783 B1

FIG.4

FIG.5

FIG. 6